# FASCICULE DE BREVET EUROPEEN

(11) **EP 0 824 638 B1**
(45) Date de publication et mention de la délivrance du brevet: **19.01.2000**
(21) Numéro de dépôt: 96906813.9
(22) Date de dépôt: 12.03.1996
(51) Int. Cl.: F16D 65/097

(54) **PATIN ET PISTON DE FREIN A ACCOUPLEMENT AUTOMATIQUE**
BREMSBELAG- UND KOLBEN MIT AUTOMATISCHER VERBINDUNG
SELF-COUPLING BRAKE PAD AND PISTON

(30) Priorité: 25.04.1995 FR 9504903
(43) Date de publication de la demande: 25.02.1998
(73) Titulaire: Bosch Systemes de Freinage, 93700 Drancy (FR)
(72) Inventeur: MALIGNE, Jean Charles, F-93300 Aubervilliers (FR)
(74) Mandataire: Bentz, Jean-Paul
(86) Numéro de dépôt international: FR9600378
(87) Numéro de publication internationale: WO9634215

(56) Documents cités:
- EP-A- 0 218 074
- DE-A- 4 119 892
- GB-A- 2 147 376

## Description

La présente invention concerne un dispositif d'application d'une force de freinage, utilisable dans un frein à disque, et comprenant un piston de frein présentant un volume intérieur ouvert, un patin comprenant un support et destiné à être appliqué contre un disque par un mouvement du piston suivant une première direction axiale orientée suivant un axe du piston, et des moyens de fixation à effet réversible, au moins partiellement logés dans le volume intérieur du piston, pour rendre une première face du support solidaire de ce piston.

Un frein à disque équipé d'un dispositif de ce type est par exemple décrit dans le brevet US 4 609 077.

Traditionnellement, les dispositifs de ce type comprennent, en tant que moyens de fixation, des ressorts fixés à demeure sur le support de patin, présentant une longueur relativement importante, et introduits dans le volume intérieur du piston au moment du montage du frein.

Un tel arrangement, qui oblige à ménager entre le disque et le patin une place suffisante pour permettre l'introduction de ces ressorts dans le piston, se révèle nécessairement exigeant en terme d'encombrement.

La présente invention a précisément pour but de proposer un dispositif d'application de force de freinage, utilisable dans un frein à disque, qui soit affranchi de cet inconvénient.

A cette fin, le dispositif de l'invention est essentiellement caractérisé en ce que ces moyens de fixation comprennent : un chanfrein bordant le volume intérieur du piston; un élargissement périphérique du volume intérieur du piston, formé à distance du chanfrein; une pièce de fixation passive fixée à la première face du support et présentant un bord décollé du support pour laisser subsister en plusieurs points un interstice entre ce bord et le support; et une pièce de fixation active montée sélectivement coulissante dans le piston suivant une seconde direction axiale opposée à la première, et comportant plusieurs pinces d'un premier type et plusieurs pinces d'un second type, toutes les pinces présentant chacune une branche périphérique logée dans le volume intérieur du piston et élastiquement sollicitée suivant une première direction radiale qui fuit l'axe du piston, la branche périphérique de chaque pince de premier type pointant suivant la première direction axiale et se terminant par un crochet qui présente une partie active tournée vers l'interstice et susceptible de venir porter contre la première face du support, et une partie dorsale portant initialement contre le chanfrein, la branche périphérique de chaque pince de second type pointant suivant la seconde direction axiale et se terminant par un relief, les pinces ayant des dimensions telles qu'un mouvement du piston suivant la première direction axiale, effectué dans des conditions initiales dans lesquelles le patin n'est pas encore fixé au piston, provoque : un déplacement de la pièce de fixation active suivant la seconde direction axiale par rapport au piston, par appui de la partie active de chaque crochet contre la première face du support; un déplacement de chaque crochet suivant une seconde direction radiale, inverse de la première, par un guidage de la partie dorsale de chaque crochet sur le chanfrein; une introduction corrélative de la partie active de chaque crochet dans l'interstice; et une introduction de chaque relief dans l'élargissement du volume intérieur du piston.

Selon un mode de réalisation préféré de l'invention, la pièce de fixation active comporte un orifice central enfilé sur une colonnette centrale du piston.

En outre, ce dispositif comporte par exemple trois pinces de premier type régulièrement espacées les unes des autres, et trois pinces de second type intercalées entre les pinces de premier type et également régulièrement espacées les unes des autres.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe schématique d'un dispositif conforme à l'invention, observé dans un état initial;
- la Figure 2 est une vue en plan des pièces de fixation active et passive, observées suivant la ligne II-II de la Figure 1;
- la Figure 3 est une vue en coupe analogue à celle de la Figure 1, montrant le dispositif de l'invention dans un état intermédiaire; et
- la Figure 4 est une vue en coupe analogue à celle de la Figure 1, montrant le dispositif de l'invention dans un état final.

Le dispositif de l'invention comprend, de façon connue en soi, un piston de frein 1 présentant un volume intérieur ouvert 100, un patin 2 comprenant un support 20 et destiné à être appliqué contre un disque 3 par un mouvement du piston suivant une première direction axiale A1 orientée suivant un axe A du piston, et des moyens de fixation à effet réversible, qui font plus particulièrement l'objet de l'invention, qui sont au moins partiellement logés dans le volume intérieur 100 du piston, et qui sont destinés à rendre une première face 21 du support 20 solidaire de ce piston 1.

Comme le sait également l'homme de l'art, le piston 1 est en fait monté coulissant dans un cylindre hydraulique 4, et son mouvement selon l'axe Al est obtenu par injection de fluide sous pression dans le cylindre 4.

Selon l'invention, les moyens de fixation comprennent : un chanfrein 101 bordant le volume intérieur 100 du piston; un élargissement périphérique progressif 102 du volume intérieur 100 du piston, formé à distance du chanfrein 101; une pièce de fixation passive 5 fixée à la première face 21 du support 20; et une pièce de fixation active 6 montée sélectivement coulissante dans le piston 1 suivant une seconde direction axiale A2 opposée à la première.

La pièce de fixation passive 5, qui dans le mode de réalisation illustré, adopte la forme d'un triangle à coins arrondis, présente un bord 50 décollé du support 20 pour laisser subsister en plusieurs points, ou sur toute sa périphérie comme illustré, un interstice 51 entre ce bord 50 et le support 20.

La pièce de fixation active 6 comporte par exemple trois pinces d'un premier type, telles que 61, et trois pinces d'un second type, telles que 62, toutes les pinces présentant chacune une branche périphérique telle que 610 et 620, logée dans le volume intérieur 100 du piston et élastiquement sollicitée suivant une première direction radiale, telle que R1, qui fuit l'axe A du piston 1.

Les pinces de premier et second type sont régulièrement espacées angulairement les unes des autres, les pinces de second type s'intercalant en outre entre les pinces de premier type.

La pièce de fixation active 6 présente par ailleurs une zone centrale 63 percé d'un orifice 630 par lequel elle est enfilée sur une colonnette centrale 103 du piston 1, cette zone centrale 63 assurant la liaison entre les pinces de premier et de second type.

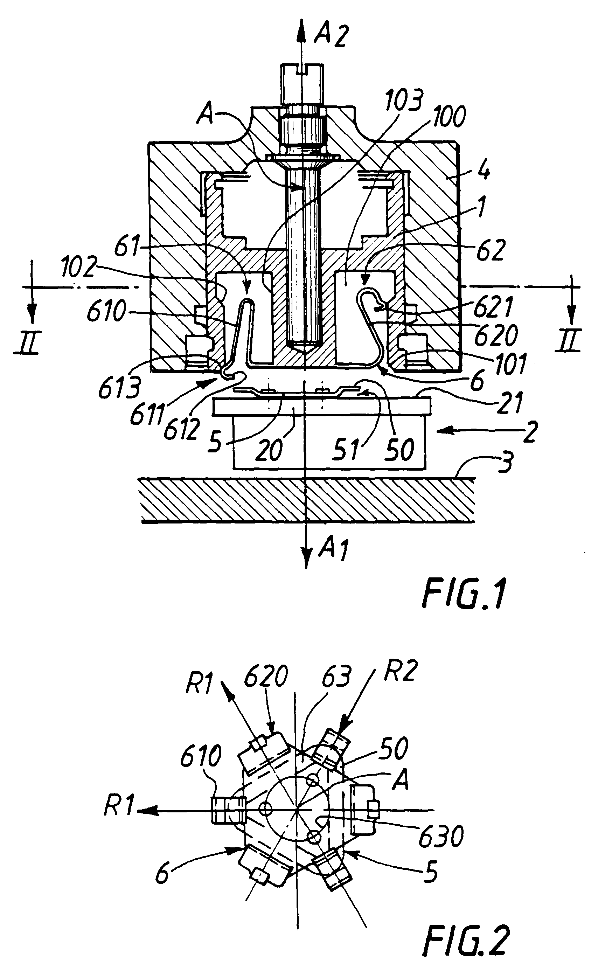

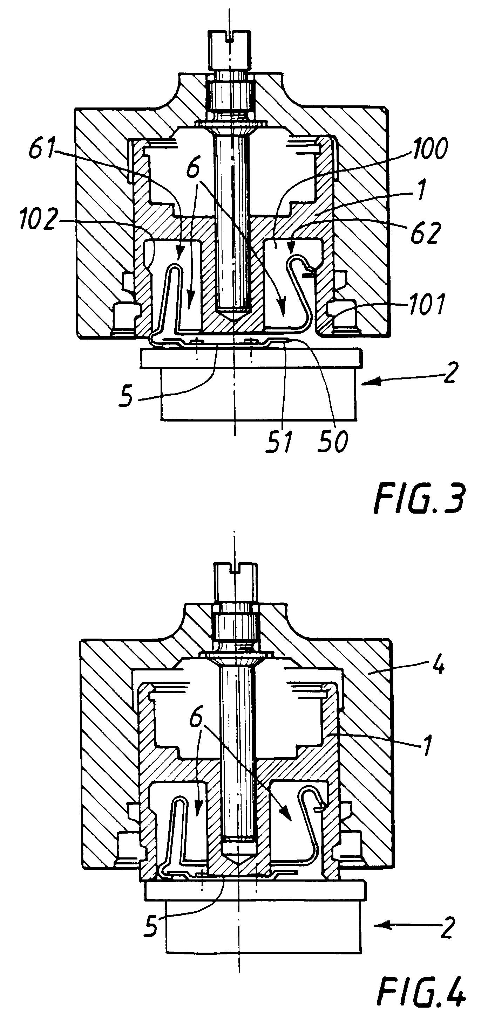

La branche périphérique 610 de chaque pince 61 de premier type pointe suivant la première direction axiale A1 et se termine par un crochet 611 qui présente d'une part une partie active 612 tournée vers l'interstice 51 et susceptible de venir porter contre la première face 21 du support 20 (voir figures 3 et 4), et d'autre part une partie dorsale 613 portant initialement contre le chanfrein (voir figure 1).

La branche périphérique 620 de chaque pince 62 de second type pointe suivant la seconde direction axiale A2 et se termine par un relief 621.

Enfin, les pinces telles que 61 et 62 ont, notamment par rapport au chanfrein 101 et à l'élargissement 102 du volume intérieur 100 du piston 1, des dimensions que l'homme de l'art pourra aisément choisir pour obtenir les configurations illustrées aux figures 3 et 4 et commentées en détail ci-après.

Lorsque le patin 2 est approché du piston 1, à partir d'un position relative représentée sur la figure 1, la partie active 612 de chaque crochet de la pièce de fixation active 6 vient en appui sur la première face 21 du support de patin 20, comme le montre la figure 3.

En supposant que le patin 2 est alors en appui sur le disque 3 ou sur une pièce intercalaire s'appuyant elle-même sur le disque 3, un mouvement du piston suivant la première direction axiale A1 a alors pour effet d'une part de déplacer la pièce de fixation active 6 suivant la seconde direction axiale A2 par rapport au piston, en raison de l'appui de la partie active 612 de chaque crochet contre la première face 21 du support, d'autre part un déplacement de chaque crochet 611 suivant une seconde direction radiale, telle que R2, inverse de la première, par un guidage de la partie dorsale 613 de chaque crochet 611 sur le chanfrein 101, ainsi qu'une introduction corrélative de la partie active 612 de chaque crochet dans l'interstice 51 (figure 4), et enfin une introduction du relief 621 de chaque pince de second type dans l'élargissement 102 du volume intérieur 100 du piston 1, ce dernier mouvement permettant à la pièce 6 d'opposer, à toute force qui serait appliquée à la pièce 6 ou au patin 2 suivant la direction A1, une résistance suffisante pour permettre au patin de rester fixé au piston 1, en dehors du cas où ce patin est volontairement extrait pour en permettre le remplacement.

## Revendications

1. Dispositif d'application d'une force de freinage, comprenant un piston de frein (1) présentant un volume intérieur ouvert (100), un patin (2) comprenant un support (20) et destiné à être appliqué contre un disque (3) par un mouvement du piston suivant une première direction axiale (A1) orientée suivant un axe (A) du piston, et des moyens de fixation à effet réversible, au moins partiellement logés dans le volume intérieur du piston, pour rendre une première face (21) du support solidaire de ce piston, caractérisé en ce que ces moyens de fixation comprennent : un chanfrein (101) bordant le volume intérieur (100) du piston; un élargissement périphérique (102) du volume intérieur du piston, formé à distance du chanfrein; une pièce de fixation passive (5) fixée à la première face (21) du support et présentant un bord (50) décollé du support pour laisser subsister en plusieurs points un interstice (51) entre ce bord et le support; et une pièce de fixation active (6) montée sélectivement coulissante dans le piston (1) suivant une seconde direction axiale (A2) opposée à la première, et comportant plusieurs pinces (61) d'un premier type et plusieurs pinces (62) d'un second type, toutes les pinces (61, 62) présentant chacune une branche périphérique (610, 620) logée dans le volume intérieur du piston et élastiquement sollicitée suivant une première direction radiale (R1) qui fuit l'axe (A) du piston, la branche périphérique (610) de chaque pince (61) de premier type pointant suivant la première direction axiale (A1) et se terminant par un crochet (611) qui présente une partie active (612) tournée vers l'interstice et susceptible de venir porter contre la première face (21) du support, et une partie dorsale (613) portant initialement contre le chanfrein (101), la branche périphérique (620) de chaque pince (62) de second type pointant suivant la seconde direction axiale (A2) et se terminant par un relief (621), les pinces (61, 62) ayant des dimensions telles qu'un mouvement du piston (1) suivant la première direction axiale (A1), effectué dans des conditions initiales dans lesquelles le patin n'est pas encore fixé au piston, provoque : un déplacement de la pièce de fixation active (6) suivant la seconde direction axiale (A2) par rapport au piston, par appui de la partie active (612) de chaque crochet (611) contre la première face (21) du support; un déplacement de chaque crochet (611) suivant une seconde direction radiale (R2), inverse de la première, par un guidage de la partie dorsale (613) de chaque crochet (611) sur le chanfrein (101); une introduction corrélative de la partie active (612) de chaque crochet dans l'interstice (51); et une introduction de chaque relief (621) dans l'élargissement (102) du volume intérieur du piston.

2. Dispositif selon la revendication 1, caractérisé en ce que la pièce de fixation active (6) comporte un orifice central (630) enfilé sur une colonnette centrale (103) du piston.

3. Dispositif selon la revendication 1 ou 2, caractérisé en ce qu'il comporte trois pinces de premier type régulièrement espacées les unes des autres, et trois pinces de second type intercalées entre les pinces de premier type et également régulièrement espacées les unes des autres.

## Patentansprüche

1. Vorrichtung zum Aufbringen einer Bremskraft, mit einem Bremskolben (1), der ein offenes inneres Volumen (100) aufweist, einem Schuh (2), der einen Träger (20) aufweist und dazu vorgesehen ist, durch eine Bewegung des Kolbens entlang einer ersten axialen Richtung (A1), die entlang einer Achse (A) des Kolbens ausgerichtet ist, an einer Scheibe (3) anzugreifen, sowie mit Befestigungsmitteln mit reversibler Wirkung, die wenigstens zum Teil im inneren Volumen des Kolbens angeordnet sind, um eine erste Fläche (21) des Trägers fest mit diesem Kolben zu verbinden, dadurch gekennzeichnet, daß diese Befestigungsmittel enthalten: eine Abschrägung (101), die das innere Volumen (100) des Kolbens säumt, eine entlang des Umfangs verlaufende Aufweitung (102) des inneren Volumens des Kolbens, die in einem Abstand zur Abschrägung ausgebildet ist, ein passives Befestigungsstück (5), das an der ersten Fläche (21) des Trägers befestigt ist und einen Rand (50) aufweist, der von der Auflage abgehoben ist, um an mehreren Punkten einen Zwischenraum (51) zwischen diesem Rand und der Auflage bestehen zu lassen, sowie ein aktives Befestigungsstück (6), das so im Kolben (1) angebracht ist, daß es selektiv entlang einer zweiten axialen Richtung (A2) gleiten kann, die der ersten entgegengerichtet ist, und das mehrere Klemmen (61) eines ersten Typs aufweist sowie mehrere Klemmen (62) eines zweiten Typs, wobei alle Klemmen (61, 62) jeweils einen äußeren Abschnitt (610, 620) aufweisen, der im inneren Volumen des Kolbens angeordnet ist und elastisch entlang einer ersten radialen Richtung (R1) beaufschlagt wird, die von der Achse (A) des Kolbens weg verläuft, wobei der äußere Abschnitt (610) jeder Klemme (61) des ersten Typs entlang der ersten axialen Richtung (A1) gerichtet ist und in einem Haken (611) endet, der einen aktiven Teil (612) aufweist, der zum Zwischenraum gerichtet ist und an der ersten Fläche (21) der Auflage ruhen kann, und einen rückwärtigen Teil (613), der im Ausgangszustand an der Abschrägung (101) ruht, wobei der äußere Abschnitt (620) jeder Klemme (62) des zweiten Typs entlang der zweiten axialen Richtung (A2) gerichtet ist und in einem Vorsprung (621) endet, wobei die Klemmen (61, 62) so dimensioniert sind, daß eine Bewegung des Kolbens (1) entlang der ersten axialen Richtung (Al), die im Ausgangszustand ausgeführt wird, in dem der Schuh noch nicht am Kolben fixiert ist, hervorruft: eine Verschiebung des aktiven Befestigungsstücks (6) in bezug zum Kolben entlang der zweiten axialen Richtung (A2) durch die Anlage des aktiven Teils (612) jeden Hakens (611) an der ersten Fläche (21) der Auflage, eine Verschiebung jedes Hakens (611) entlang einer zweiten radialen Richtung (R2), die der ersten entgegengerichtet ist, durch eine Führung des rückwärtigen Teils (613) von jedem Haken (611) auf der Abschrägung (101), eine damit korrelierende Einführung des aktiven Teils (612) jeden Hakens in den Zwischenraum (51) und eine Einführung jedes Vorsprungs (621) in die Aufweitung (102) des inneren Volumens des Kolbens.

2. Vorrichtung nach Anspruch 1, dadurch gekennzeichnet, daß das aktive Befestigungsstück (6) eine zentrale Öffnung (630) besitzt, die auf einen zentralen Stift (103) des Kolbens aufgesteckt ist.

3. Vorrichtung nach Anspruch 1 oder 2, dadurch gekennzeichnet, daß sie drei Klemmen des ersten Typs besitzt, die gleichmäßig voneinander beabstandet sind, und drei Klemmen des zweiten Typs, die zwischen den Klemmen des ersten Typs untergebracht sind und ebenfalls gleichmäßig voneinander beabstandet sind.

## Claims

1. Device, for applying a braking force, comprising a brake piston (1) exhibiting an open internal volume (100), a pad (2) comprising a backing (20) and intended to be applied against a disk (3) by a movement of the piston in a first axial direction (A1) oriented along an axis (A) of the piston, and fastening means with reversible effect at least partially housed in the internal volume of the piston, for securing a first face (21) of the backing to this piston, characterized in that these fastening means comprise: a chamfer (101) bordering the internal volume (100) of the piston; a peripheral widening (102) of the internal volume of the piston, formed some distance from the chamfer; a passive fastening component (5) fastened to the first face (21) of the backing and exhibiting an edge (50) detached from the backing to allow a gap (51) to remain between this edge and the backing at several points; and an active fastening component (6) mounted selectively to slide in the piston (1) in a second axial direction (A2) opposite from the first, and including several clips (61) of a first type and several clips (62) of a second type, all the clips (61, 62) each exhibiting a peripheral branch (610, 620) housed in the internal volume of the piston and urged elastically in a first radial direction (R1) away from the axis (A) of the piston, the peripheral branch (610) of each clip (61) of the first type pointing in the first axial direction (A1) and ending in a hook (611) which has an active part (612) turned towards the gap and capable of coming to bear against the first face (21) of the backing, and a dorsal part (613) initially bearing against the chamfer (101), the peripheral branch (620) of each clip (62) of the second type pointing in the second axial direction (A2) and ending in a relief (621), the clips (61, 62) having dimensions such that a movement of the piston (1) in the first axial direction (A1), carried out under initial conditions in which the pad is not yet fastened to the piston, causes: a displacement of the active fastening component (6) in the second axial direction (A2) with respect to the piston, through the active part (612) of each hook (611) bearing against the first face (21) of the backing; a displacement of each hook (611) in a second radial direction (R2), the opposite direction from the first, by the dorsal part (613) of each hook (611) being guided over the chamfer (101); corresponding insertion of the active part (612) of each hook into the gap (51); and insertion of each relief (621) in the widening (102) of the internal volume of the piston.

2. Device according to Claim 1, characterized in that the active fastening component (6) includes a central orifice (630) slipped over a central guide pin (103) of the piston.

3. Device according to Claim 1 or 2, characterized in that it includes three clips of the first type, uniformly spaced apart, and three clips of the second type interspersed between the clips of the first type and also uniformly spaced apart.
